# EUROPEAN PATENT APPLICATION

(11) **EP 4 830 859 A1**
(43) Date of publication of application: **28.10.2026**
(21) Application number: 25172282.3
(22) Date of filing: 24.04.2025
(51) Int. Cl.: B23K 9/04, B23B 41/00, B23K 28/02, B23K 37/02, B23P 6/00, B23Q 5/32, B23Q 9/00

(54) **MOBILE BORING AND WELDING ASSEMBLY**

(71) Applicant: Mokry, Grzegorz, Kraków 31-589 (PL); Yushchanka, Siarhei, 30-085 Krakow (PL); Adzinets, Mikhail, 31-345 Krakow (PL)
(72) Inventor: Mokry, Grzegorz, Kraków 31-589 (PL); Yushchanka, Siarhei, 30-085 Krakow (PL); Adzinets, Mikhail, 31-345 Krakow (PL)
(74) Representative: Fortuna, Jevgenijs

(57) **Abstract**

A mobile boring and welding assembly (1) is provided, comprising a load bearing bracket (2') and a support bracket (2") configured to receive a machining shaft (3), a machining shaft rotation mechanism, and a machining shaft feeding mechanism. The rotation mechanism includes a motor and a transmission having a belt drive and two keyed drive gears for transmitting torque to the machining shaft. The feeding mechanism includes a ball screw drive with a non-rotating nut, one or more linear guides arranged parallel to the ball screw drive, a carriage slidably mounted on the guides and fixed to the machining shaft, a feeding motor, and a feeding transmission including a belt drive and two keyed drive gears. The machining shaft is configured for both rotation and axial displacement via coordinated operation of the rotation and feeding mechanisms. The motors, carriage, linear guides, and ball screw drive are mounted between the brackets. A control unit may be provided for adjusting operational parameters and monitoring motor status.

## Description

### Field of the Invention

The present invention relates to portable machining equipment, particularly to a mobile boring and welding assembly used for on-site precision machining, repair, and restoration operations, specifically designed for boring and welding of holes in various mechanical structures and components.

### Background Art

Mobile machining assemblies for boring and welding are commonly used in maintenance, repair, and manufacturing operations, especially when machining must be conducted directly on-site due to the size, complexity, or immobility of mechanical components or structures. Conventional portable boring and welding assemblies typically include a machining shaft, a rotation drive, a linear feeding mechanism, and means for fixing the assembly relative to the workpiece. However, existing assemblies often suffer from issues relating to mechanical accuracy, compactness, versatility in operation, or ease of setup and control.

There is known a portable boring and welding machine with gear wheels (EP1375055B1). This known machine comprises a main mounting structure and a tool shaft extending horizontally through it, rotatable by a motor positioned with its axis oriented vertically and skew relative to the shaft axis. Torque transmission from the vertically oriented motor to the tool shaft occurs through a rigid transmission comprising a worm gear connected to the motor and a cooperating helical gearwheel connected to the shaft. The rigid transmission components are enclosed within a dedicated casing connected to the main mounting structure. This prior-art machine thus employs a worm-and-gear rigid transmission with vertically skewed motor positioning, differing substantially from the horizontally aligned, belt-driven servo motor arrangement and ball screw-based feeding mechanism provided by the present invention.

There is also known a mobile welding assembly (RU2773541C1). This assembly comprises a single-stage gear reducer enclosed within a housing, the reducer including driving and driven gears supported on bearings. The driving gear is mounted on the output shaft of a multi-stage geared motor equipped with a control unit that enables adjustment of the direction and speed of rotation. The driven gear is connected to a hollow lead screw by means of a spline coupling, the lead screw being designed to accommodate a welding rod and provide its axial advancement. Axial displacement is implemented through a mechanism including a spring-loaded split nut, which engages the lead screw to permit controlled longitudinal movement of the welding rod during welding operations.

There is also known a mobile boring and welding assembly (WO2022115005A1). This assembly includes a front and rear traverse interconnected by cylindrical guides, with a collet carriage mounted between the guides on a lead screw. The carriage is equipped with clamping elements and incorporates an axial rotation drive. The lead screw is driven by a toothed belt transmission connected to the shaft of a longitudinal feed drive motor, and is also provided with a handwheel for manual movement. The system further comprises a control unit based on a microcontroller, which controls both the axial rotation drive and the longitudinal feed drive motor, and receives signals from limit sensors mounted on the traverses.

While the above-described mobile boring and welding assemblies provide functional solutions for on-site machining and repair, they generally involve structural and functional limitations that affect their accuracy, modularity, integration of control, overall dimensions, and weight. In particular, known designs rely on rigid gear transmissions, spline couplings, or mechanically engaged lead screw systems that may introduce backlash, limit positioning precision, and impair efficient axial force transmission. Additionally, the spatial arrangement of drive components-such as skewed or externally positioned motors and gear elements-often leads to increased weight and volume, complicating transport, setup, and use in confined or remote environments. These limitations highlight the need for an improved, structurally integrated assembly that optimizes the selection and configuration of components to achieve high accuracy, minimal vibration, increased power efficiency, and stable operation across a wide range of working conditions and materials.

### Summary of the Invention

The present invention addresses the drawbacks of the prior art and enables an exceptionally compact and lightweight machine architecture without compromising mechanical performance or reliability. The invention provides a mobile boring and welding assembly comprising two mounting brackets, specifically a load-bearing bracket and a support bracket, configured to support and position a machining shaft. The assembly further includes a machining shaft rotation mechanism operatively connected to the machining shaft to selectively rotate the shaft in clockwise and/or counterclockwise directions. Additionally, the assembly comprises a machining shaft feeding mechanism having a screw drive and one or more linear guides arranged parallel to each other between the load-bearing bracket and the support bracket, as well as a movable carriage slidably mounted on the linear guides. The movable carriage includes a shaft fixation mechanism and is configured to advance and retract the machining shaft along its axis.

The machining shaft rotation mechanism comprises a rotation motor mechanically coupled to a rotation transmission, which includes a first keyed drive gear mounted on an output shaft of the motor, and a second keyed drive gear mounted on the machining shaft. Similarly, the machining shaft feeding mechanism includes a feeding motor mechanically coupled to a feeding transmission comprising a first keyed drive gear mounted on an output shaft of the feeding motor, and a second keyed drive gear mounted on the screw drive. According to a preferred embodiment, the first and second keyed drive gears of each transmission may be interconnected via a belt. However other torque transmission means, such as gear trains or chain drives, are possible.

The ball screw drive is mechanically connected to the feeding motor through the first and second keyed drive gears, which may optionally be interconnected by a belt, allowing precise axial displacement of the carriage and consequently the machining shaft. The machining shaft is similarly mechanically coupled to the rotation motor via the first and second keyed drive gears, optionally using a belt to transmit torque between them.

According to another aspect, the rotation motor, feeding motor, carriage, ball screw drive, and linear guides are positioned between the load-bearing bracket and the support bracket, providing a compact, structurally integrated, and stable configuration. The keyed drive gears of the respective transmissions are arranged outside the load-bearing bracket, adjacent to the ends of the machining shaft and screw drive, and may be interconnected by belts or other coupling elements. These are mechanically connected to their respective motors through openings in the bracket.

Further embodiments include the machining shaft being configured for selective attachment of either a boring shaft or welding shaft, with the shaft being rotatably mounted and axially fixed to the carriage for coordinated movement.

The machining shaft rotation and feeding mechanisms optionally include planetary reducers, and the associated motors may be servo motors for enhanced operational precision.

According to a further embodiment, the assembly may comprise at least two, preferably four linear guides arranged in parallel pairs flanking the ball screw drive, ensuring robust and accurate linear guidance.

Still further embodiments provide linear bearing systems that support radial loads acting perpendicular to the machining shaft axis, optionally comprising linear rolling bearings with ball circulation, prismatic guides with scraped surfaces, polymer-based bushings, air bearings, magnetic bearings, or roller-type linear guides.

### Brief Description of Drawings

Fig. 1 is a schematic front view of the mobile boring and welding assembly, showing the basic structure;
Fig. 2 is a side view of the assembly, showing the arrangement of the load bearing bracket, the feeding transmission, and the rotation transmission;
Fig. 3 is a partial axonometric view of the assembly, illustrating the structural and functional elements including the main brackets, linear guides, drive components, and openings in the load bearing bracket;
Fig. 4 is a partial axonometric view of the assembly, showing the location and orientation of the machining shaft rotation motor, the machining shaft feeding motor, as well as the planetary reducers;
Fig. 5 is a side cross-sectional view of a portion of the assembly, showing the positioning of the machining shaft and the screw drive within the load bearing bracket;
Fig. 6 is an axonometric view of the assembly including a control unit, an operational indicator, and a user interface for motor control;
Fig. 7 is an axonometric view of the assembly with a boring shaft installed as the machining shaft;
Fig. 8 is an axonometric view of the assembly with a welding shaft installed as the machining shaft.

### Detailed Description of Invention

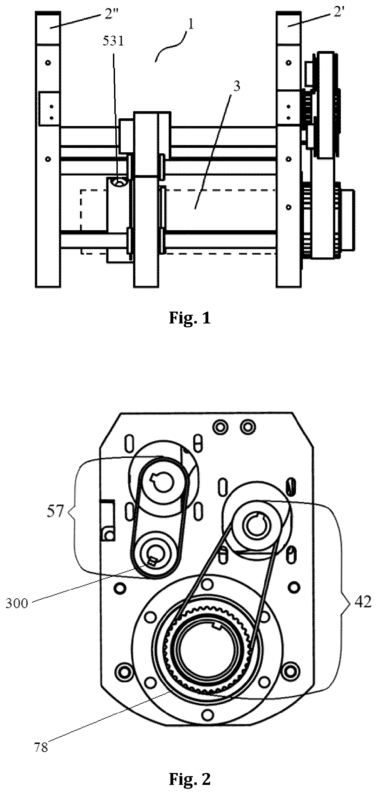

The proposed mobile boring and welding assembly 1 (Fig. 1), comprises: two mounting brackets: a load bearing bracket 2' and a support bracket 2". The load bearing bracket 2' is configured to receive a machining shaft 3. The support bracket 2" can be configured to at least partially receive the machining shaft 3. The load bearing bracket 2' and the support bracket 2" are adapted for mounting the assembly 1 onto bearing supports or a workpiece structure.

The assembly 1 further comprises a machining shaft rotation mechanism, which comprises a machining shaft rotation motor 41, and a machining shaft rotation transmission 42 (Fig. 2, 3, 4). The machining shaft rotation transmission 42 is configured to be operatively connected to a machining shaft 3 and configured for rotating a machining shaft 3 in clockwise and/or counterclockwise directions. The machining shaft rotation transmission 42 comprises a machining shaft rotation belt 43, a machining shaft rotation first keyed drive gear 44, mounted on an output shaft of the machining shaft rotation motor 41 (or on an intermediate shaft), and a machining shaft rotation second keyed drive gear 46, mounted on the machining shaft 3 (or rotatably supported on the support bracket 2" via a bearing 78, while being operatively coupled to the machining shaft 3 through a key 300 inserted into a keyway 301 formed in the shaft 3, to enable torque transmission).

The assembly 1 further comprises a machining shaft feeding mechanism, which comprises a screw drive 51, one or more linear guides 52, a movable carriage 53 being slidably mounted on the one or more linear guides 52. The machining shaft feeding mechanism further comprises a machining shaft feeding motor 55, a screw drive nut 56 rigidly fixed to the movable carriage 53, and a machining shaft feeding transmission 57, comprising a machining shaft feeding belt 58, a machining shaft feeding first keyed drive gear 59 mounted on an output shaft of the machining shaft feeding motor 55 or on an intermediate shaft, and a machining shaft feeding second keyed drive gear 77 mounted on the screw drive 51.

The movable carriage 53 having a machining shaft fixation mechanism 531 and configured for advancing and retracting the machining shaft 3 along its axis. The movable carriage 53 is slidably mounted on the one or more linear guides 52, preferably, by means of linear bearing systems 521 configured to support radial loads acting perpendicular to the axis of the machining shaft 3. The linear bearing systems 521 may comprise linear rolling bearings 522 with ball circulation, or bearing structures selected from prismatic guides with scraped surfaces, polymer-based bushings, air bearings, magnetic bearings, or roller-type linear guides. The machining shaft fixation mechanism 531 is mounted on the movable carriage 53 and is configured to rigidly secure the machining shaft 3 by means of e.g. a clamping screw 532.

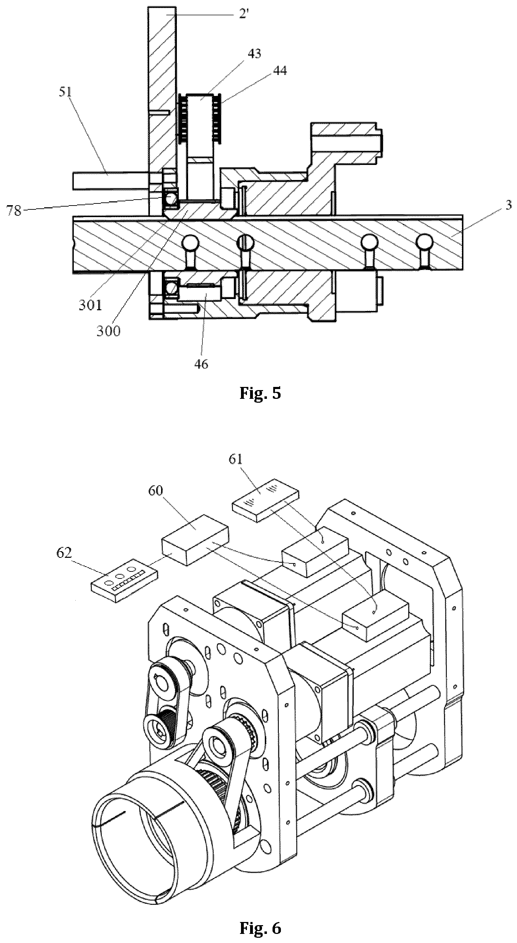

According to the invention, the screw drive 51 is a ball screw drive 51. The ball screw drive 51 is mechanically coupled to the machining shaft feeding motor 55 through the machining shaft feeding first keyed drive gear 59 and the machining shaft feeding second keyed drive gear 77, which may be interconnected by the machining shaft feeding belt 58. The ball screw drive 51 is thus mechanically configured to displace the carriage 53 along its axis. The ball screw drive 51 is provided with a keyway 301 (Fig. 2, 5) for torque-transmitting engagement with the machining shaft feeding second keyed drive gear 77 by means of a key 300 inserted into the keyway 301.

One or more linear guides 52 and the ball screw drive 51 are arranged mutually parallel, between the load bearing bracket 2' and the support bracket 2".

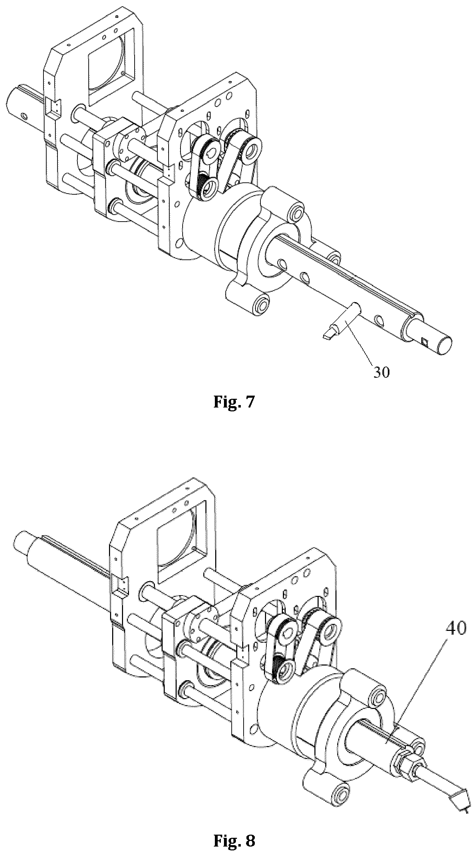

According to an embodiment, the mobile boring and welding assembly 1 further may comprise a machining shaft 3. The machining shaft 3 may be implemented either as a boring shaft 30 (Fig 7) or as a welding shaft 40 (Fig. 8), depending on the intended operation, wherein the entire shaft is selectively mounted and replaced as needed. The machining shaft 3 is rotatably mounted and axially fixed to the movable carriage 53 via the machining shaft fixation mechanism 531, such that it can be displaced along its axis together with the carriage 53, and the machining shaft 3 is provided with a keyway for torque-transmitting engagement with the machining shaft rotation second keyed drive gear 46. The machining shaft 3 is thus mechanically coupled to the machining shaft rotation motor 41 via the machining shaft rotation first keyed drive gear 44 and the machining shaft rotation second keyed drive gear 46, which may be interconnected by the shaft rotation belt 43.

According to the invention, the machining shaft feeding motor 55, the machining shaft rotation motor 41, the carriage 53, the ball screw drive 51, and the linear guides 52 are mounted between the load bearing bracket 2' and the support bracket 2". The machining shaft feeding motor 55 and the machining shaft rotation motor 41 are preferably horizontally arranged. The machining shaft 3 and ball screw drive 51 extend outward beyond the load-bearing bracket 2', each having an external portion provided with respective keyed drive gears 46, 77. The machining shaft rotation first keyed drive gear 44 is mounted externally on the output shaft of the machining shaft rotation motor 41, and the second keyed drive gear 59 is externally mounted on the output shaft of the machining shaft feeding motor 55, each gear positioned adjacent to the external side of the load-bearing bracket 2' with a suitable clearance gap. The shaft rotation belt 43 and the machining shaft feeding belt 58 are externally located on the opposite side of the load-bearing bracket 2', mechanically coupling the motors 41, 55 to the machining shaft 3 and the ball screw drive 51 via their respective keyed gears (44 with 46, and 59 with 77).

The load-bearing bracket 2' is provided with multiple functional openings. A first opening 201 and a second opening 202 are respectively aligned with the output shafts of the rotation motor 41 and the feeding motor 55, allowing mechanical connection to the externally mounted keyed drive gears 46 and 77 via the belt drives 43 and 58. Additionally, a third opening 203 accommodates the passage of the machining shaft 3, and a fourth opening 204 accommodates the ball screw drive 51, allowing both components to extend outward from the bracket 2' and interface with their corresponding drive gears.

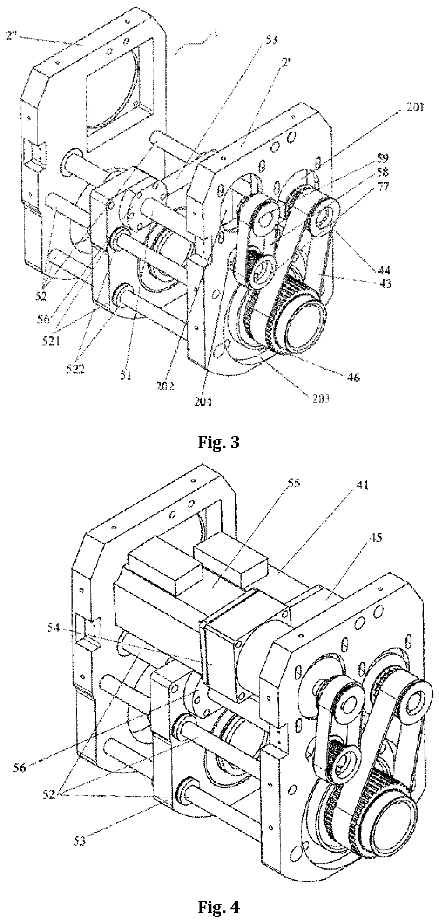

According to the preferred embodiment, the machining shaft rotation transmission 42 further comprises a planetary reducer 45. Also, the machining shaft feeding mechanism further comprises a planetary reducer 54. In the preferred configuration, the planetary reducer 45 is operatively arranged between the machining shaft rotation motor 41 and the first keyed drive gear 44, while the planetary reducer 54 is operatively arranged between the machining shaft feeding motor 55 and the first keyed drive gear 59, such that both reducers are located between their respective motors and the load bearing bracket 2' (Fig. 4). The machining shaft feeding motor 55 and the machining shaft rotation motor 41 are preferably servo motors. However, the machining shaft rotation motor 41 and the machining shaft feeding motor 55 may be implemented using various types of actuators, including AC or DC electric motors with or without gear reduction, as well as pneumatic or hydraulic drives, depending on the required application parameters. Similarly, the planetary reducers 45 and 56 may be substituted with other known types of gear or transmission mechanisms.

According to an embodiment, the mobile boring and welding assembly 1 comprises at least two, preferably four linear guides 52 arranged in mutually parallel pairs on opposite sides of the longitudinal axis of the screw drive 51.

The claimed mobile boring and welding assembly 1 may further comprise a control unit 60 configured for selective and controllable adjustment of the rotational speed of the machining shaft rotation motor 41 and/or the linear feed rate of the machining shaft feeding motor 55, and an indicator 61 configured to display operational parameters of said motors (Fig. 6).

In operation, the mobile boring and welding assembly 1 is mounted onto a workpiece or machine body via the load bearing bracket 2' and the support bracket 2", which together support the machining shaft 3. The machining shaft 3 is selectively implemented either as a boring shaft 30 or as a welding shaft 40, depending on the intended operation (Fig. 7, 8). The machining shaft 3 is rotatably driven by the machining shaft rotation motor 41, which transmits torque through the shaft rotation belt 43 and the machining shaft rotation first keyed drive gear 44, enabling clockwise or counterclockwise rotation of the shaft. For linear feed, the machining shaft 3 is rigidly fixed to the movable carriage 53 via the machining shaft fixation mechanism 531, such as a clamping screw 532. The carriage 53 is slidably mounted on one or more linear guides 52, preferably by means of linear bearing systems 521. The linear guides 52 are arranged parallel to the ball screw drive 51.

During rotation of the ball screw 51, which is driven by the machining shaft feeding motor 55 via the planetary reducer 54 and the shaft feeding belt 58, the screw drive nut 56 converts the rotary motion of the ball screw 51 into linear displacement of the movable carriage 53 along the linear guides 52. Since the screw drive nut 56 is fixed and does not rotate, the entire movable carriage 53, together with the machining shaft 3 rigidly mounted thereon, moves forward or backward depending on the direction of rotation of the ball screw 51. Thus, the screw drive nut 56 functions as a rotary-to-linear motion converter, enabling precise and controllable travel of the machining shaft 3 required for performing boring or surfacing operations in the target area.

The working stroke of the machining shaft 3 is not limited by a fixed dimension and may be adapted by changing the length of the linear guides 52 and the ball screw drive 51. In practical implementation, the working stroke may vary from 50 mm to 1000 mm or more, depending on the task and the required size of the processing area. If the carriage 53 reaches its travel limit along the linear guides 52, the fixation mechanism 531 may be temporarily released and repositioned along the guides to continue axial advancement of the machining shaft 3 over the next segment. This enables extension of the working stroke up to the full length of the machining shaft 3.

The process is preferably monitored and controlled by the control unit 60, which allows to regulate the rotation speed of the machining shaft rotation motor 41 and the feed rate of the machining shaft feeding motor 55. The indicator 61 may be provided to display operational parameters, and an operator interface 62 may allow manual input.

The claimed invention allows for the implementation of a compact and functionally integrated mobile boring and welding assembly 1 in which the machining shaft 3 rotation and axial displacement are carried out with high precision and control. The combination of horizontally arranged servo-driven motors 41 and 55, a ball screw drive 51 with a fixed screw drive nut 56 mounted on a movable carriage 53, and linear guides 52 positioned in parallel, as well as the integration of all drive and guide components within the space defined between the load bearing bracket 2' and the support bracket 2", results in a compact, structurally balanced, and operationally efficient configuration. The reduced overall dimensions and weight of the assembly 1 allow its use in confined or difficult-to-access areas where conventional equipment cannot be installed. Furthermore, the minimized weight of the assembly 1 contributes to lower physical strain on personnel required to handle or reposition the equipment during setup or operation. The selected configuration of elements provides a synergistic interaction that supports stable and reliable machining or welding performance under varying conditions and facilitates field usability.

## Claims

1. A mobile boring and welding assembly (1), comprises:
two mounting brackets: a load bearing bracket (2') and a support bracket (2"); at least the load bearing bracket (2') is configured to receive a machining shaft (3), the support bracket (2") is optionally configured to at least partially receive the machining shaft (3);
a machining shaft rotation motor (41), and a machining shaft rotation transmission (42); the machining shaft rotation transmission (42) configured to be operatively connected to the machining shaft (3) and configured for rotating a machining shaft (3) in clockwise and/or counterclockwise directions;
a machining shaft feeding mechanism comprises a screw drive (51), one or more linear guides (52), a movable carriage (53) being slidably mounted on the one or more linear guides (52), the movable carriage (53) having a machining shaft fixation mechanism (531) and configured for advancing and retracting the machining shaft (3) along its axis; the machining shaft feeding mechanism further comprises a machining shaft feeding motor (55), a screw drive nut (56) rigidly fixed to the movable carriage (53) and a machining shaft feeding transmission (57);
**characterized in that:**
the machining shaft rotation transmission (42) comprises a machining shaft rotation first keyed drive gear (44) mounted on an output shaft of the machining shaft rotation motor (41) or on an intermediate shaft, and a machining shaft rotation second keyed drive gear (46) mounted on the machining shaft (3) or rotatably supported on the support bracket (2") and operatively coupled to the machining shaft (3); the machining shaft feeding transmission (57) comprises a machining shaft feeding first keyed drive gear (59) mounted on an output shaft of the machining shaft feeding motor (55) or on an intermediate shaft, and a machining shaft feeding second keyed drive gear (77) mounted on the screw drive (51); wherein the screw drive (51) is a ball screw drive (51), and the one or more linear guides (52) and the ball screw drive (51) are arranged mutually parallel, between the load bearing bracket (2') and the support bracket (2"); the ball screw drive (51) is mechanically coupled to the machining shaft feeding motor (55) via the machining shaft feeding first keyed drive gear (59) and the second keyed drive gear (77), and is mechanically configured to displace the carriage (53) along its axis; the machining shaft (3) is mechanically coupled to the machining shaft rotation motor (41) via the machining shaft rotation first keyed drive gear (44) and the second keyed drive gear (46); wherein the machining shaft feeding motor (55), the machining shaft rotation motor (41), the carriage (53), the ball screw drive (51), and the linear guides (52) are mounted between the load bearing bracket (2') and the support bracket (2").

2. The mobile boring and welding assembly (1) of claim 1, wherein the machining shaft rotation transmission (42) further comprises a machining shaft rotation belt (43) and the machining shaft feeding transmission (57) further comprises a machining shaft feeding belt (58); wherein the machining shaft rotation belt (43) operatively interconnects the machining shaft rotation first keyed drive gear (44) and the second keyed drive gear (46), and the machining shaft feeding belt (58) operatively interconnects the machining shaft feeding first keyed drive gear (59) and the second keyed drive gear (77).

3. The mobile boring and welding assembly (1) of any preceding claims, further comprising a machining shaft (3) implemented either as a boring shaft (30) or as a welding shaft (40), the machining shaft (3) being rotatably mounted and axially fixed to the movable carriage (53) via the machining shaft fixation mechanism (531), such that it can be displaced along its axis together with the carriage (53), and the machining shaft (3) being provided with a keyway for torque-transmitting engagement with the machining shaft rotation second keyed drive gear (46).

4. The mobile boring and welding assembly (1) of any preceding claims, wherein the machining shaft rotation transmission (42) further comprises a planetary reducer (45), wherein the machining shaft rotation motor (41) is a servo motor.

5. The mobile boring and welding assembly (1) of any preceding claims, wherein the machining shaft feeding mechanism further comprises a planetary reducer (54), wherein the machining shaft feeding motor (55) is a servo motor.

6. The mobile boring and welding assembly (1) of any preceding claims, wherein the assembly (1) comprises at least two, preferably four linear guides (52) arranged in mutually parallel pairs on opposite sides of the longitudinal axis of the screw drive (51).

7. The mobile boring and welding assembly (1) of any preceding claims, wherein the movable carriage (53) is slidably mounted on the one or more linear guides (52) by means of linear bearing systems (521) configured to support radial loads acting perpendicular to the axis of the machining shaft (3).

8. The mobile boring and welding assembly (1) of claim 6, wherein the linear bearing systems (521) comprise linear rolling bearings with ball circulation, or bearing structures selected from prismatic guides with scraped surfaces, polymer-based bushings, air bearings, magnetic bearings, and roller-type linear guides.

9. The mobile boring and welding assembly (1) of any preceding claims, wherein the machining shaft fixation mechanism (531) is mounted on the movable carriage (53) and is configured to rigidly secure the machining shaft (3) by means of a clamping screw (532).

10. The mobile boring and welding assembly (1) of any preceding claims, further comprising a control unit (60) configured for selective and controllable adjustment of the rotational speed of the machining shaft rotation motor (41) and/or the linear feed rate of the machining shaft feeding motor (55), and an indicator (61) configured to display operational parameters of said motors.

## Amended claims

### Amended claims in accordance with Rule 137(2) EPC.

1. A mobile boring and welding assembly (1), comprising:
two mounting brackets: a load bearing bracket (2') and a support bracket (2"); at least the load bearing bracket (2') is configured to receive a machining shaft (3), the support bracket (2") is optionally configured to at least partially receive the machining shaft (3);
a machining shaft rotation motor (41), and a machining shaft rotation transmission (42); the machining shaft rotation transmission (42) configured to be operatively connected to the machining shaft (3) and configured for rotating a machining shaft (3) in clockwise and/or counterclockwise directions;
a machining shaft feeding mechanism comprises a screw drive (51), one or more linear guides (52), a movable carriage (53) being slidably mounted on the one or more linear guides (52), the movable carriage (53) having a machining shaft fixation mechanism (531) and configured for advancing and retracting the machining shaft (3) along its axis; the machining shaft feeding mechanism further comprises a machining shaft feeding motor (55), a screw drive nut (56) rigidly fixed to the movable carriage (53) and a machining shaft feeding transmission (57);
**characterized in that:**
the machining shaft rotation transmission (42) comprises a machining shaft rotation first keyed drive gear (44) mounted on an output shaft of the machining shaft rotation motor (41) or on an intermediate shaft, and a machining shaft rotation second keyed drive gear (46) mounted on the machining shaft (3) or rotatably supported on the support bracket (2") and operatively coupled to the machining shaft (3); the machining shaft feeding transmission (57) comprises a machining shaft feeding first keyed drive gear (59) mounted on an output shaft of the machining shaft feeding motor (55) or on an intermediate shaft, and a machining shaft feeding second keyed drive gear (77) mounted on the screw drive (51); wherein the screw drive (51) is a ball screw drive (51), and the one or more linear guides (52) and the ball screw drive (51) are arranged mutually parallel, between the load bearing bracket (2') and the support bracket (2");
the ball screw drive (51) is mechanically coupled to the machining shaft feeding motor (55) via the machining shaft feeding first keyed drive gear (59) and the second keyed drive gear (77), and is mechanically configured to displace the carriage (53) along its axis; the machining shaft (3) is mechanically coupled to the machining shaft rotation motor (41) via the machining shaft rotation first keyed drive gear (44) and the second keyed drive gear (46); wherein the machining shaft feeding motor (55), the machining shaft rotation motor (41), the carriage (53), the ball screw drive (51), and the linear guides (52) are mounted between the load bearing bracket (2') and the support bracket (2").

2. The mobile boring and welding assembly (1) of claim 1, wherein the machining shaft rotation transmission (42) further comprises a machining shaft rotation belt (43) and the machining shaft feeding transmission (57) further comprises a machining shaft feeding belt (58); wherein the machining shaft rotation belt (43) operatively interconnects the machining shaft rotation first keyed drive gear (44) and the second keyed drive gear (46), and the machining shaft feeding belt (58) operatively interconnects the machining shaft feeding first keyed drive gear (59) and the second keyed drive gear (77).

3. The mobile boring and welding assembly (1) of any preceding claims, further comprising a machining shaft (3) implemented either as a boring shaft (30) or as a welding shaft (40), the machining shaft (3) being rotatably mounted and axially fixed to the movable carriage (53) via the machining shaft fixation mechanism (531), such that it can be displaced along its axis together with the carriage (53), and the machining shaft (3) being provided with a keyway for torque-transmitting engagement with the machining shaft rotation second keyed drive gear (46).

4. The mobile boring and welding assembly (1) of any preceding claims, wherein the machining shaft rotation transmission (42) further comprises a planetary reducer (45), wherein the machining shaft rotation motor (41) is a servo motor.

5. The mobile boring and welding assembly (1) of any preceding claims, wherein the machining shaft feeding mechanism further comprises a planetary reducer (54), wherein the machining shaft feeding motor (55) is a servo motor.

6. The mobile boring and welding assembly (1) of any preceding claims, wherein the assembly (1) comprises at least two, preferably four linear guides (52) arranged in mutually parallel pairs on opposite sides of the longitudinal axis of the screw drive (51).

7. The mobile boring and welding assembly (1) of any preceding claims, wherein the movable carriage (53) is slidably mounted on the one or more linear guides (52) by means of linear bearing systems (521) configured to support radial loads acting perpendicular to the axis of the machining shaft (3).

8. The mobile boring and welding assembly (1) of claim 7, wherein the linear bearing systems (521) comprise linear rolling bearings with ball circulation, or bearing structures selected from prismatic guides with scraped surfaces, polymer-based bushings, air bearings, magnetic bearings, and roller-type linear guides.

9. The mobile boring and welding assembly (1) of any preceding claims, wherein the machining shaft fixation mechanism (531) is mounted on the movable carriage (53) and is configured to rigidly secure the machining shaft (3) by means of a clamping screw (532).

10. The mobile boring and welding assembly (1) of any preceding claims, further comprising a control unit (60) configured for selective and controllable adjustment of the rotational speed of the machining shaft rotation motor (41) and/or the linear feed rate of the machining shaft feeding motor (55), and an indicator (61) configured to display operational parameters of said motors.
